# EUROPEAN PATENT APPLICATION

(11) **EP 0 543 456 A1**
(43) Date of publication of application: **26.05.1993**
(21) Application number: 92203506.8
(22) Date of filing: 14.11.1992
(51) Int. Cl.: G02B 6/28

(54) **Method for fusion-forming monomodal fibre-optic couplers**

(30) Priority: 18.11.1991 IT MI913070
(71) Applicant: SIRTI S.p.A., I-20124 Milano (IT)
(72) Inventor: Pianciola, Aurelio, I-27045 Casteggio, Pavia (IT); Tambosso, Tiziana, I-20125 Milan (IT)
(74) Representative: Fusina, Gerolamo

(57) **Abstract**

A method for fusion-forming monomodal fibre-optic couplers, in particular of 2x2 type, comprising the following steps:
a) bringing the optical fibres into mutual contact along a short length of their central zone;
b) fusing the optical fibres;
c) elongating the optical fibres during the fusion;
in which the step involving elongation of the fibres during fusion is effected by subjecting the fibres to a traction which increases with time, in particular in accordance with a logarithmic relationship.

## Description

This invention relates to a method for fusion-forming monomodal fibre-optic couplers.

In fibre-optic user industries, problems deriving from the use of fibre connectors, couplers and branchers are of very great importance.

In this respect, it is well known that the signals transported by the fibres often undergo great alteration at those points in which joints are present. This alteration relates mainly to the period of oscillation, the phase and the polarization of the signal.

However, such alteration is not always undesired as in certain cases it enables the signals to be modified and distributed in the required manner.

Particular types of monomodal couplers with precise filtration characteristics are widely used for this purpose and can also be used as wavelength dividers, polarization dividers or power distributors.

To form monomodal couplers, in particular 2x2 couplers provided with two optical fibres, the fibres are brought into mutual contact along a short distance in their central zone. When in mutual contact the fibres are fused and simultaneously elongated.

The effect of this is that the cores of the two fibres approach each other and it becomes possible to mutually transfer a signal from one fibre to the other.

The power of the signal transferred between the two fibres during the fusion varies as a function of the elongation. This is valid both for the direct power, ie the power leaving that fibre corresponding to the entry fibre, and for the coupled power, ie the output power in those fibres to which the input power is coupled.

For this reason, by interrupting the fusion at a precise extent of elongation, monomodal couplers with determined signal transfer functions can be formed.

To form these couplers, optical fibre fusion apparatus is used. This apparatus incorporates means for exerting a traction on the optical fibres during the fusion.

The currently used methods involve the application of constant velocity elongation to the fibres after bringing them into mutual contact and subjecting them to fusion.

A serious problem with this type of procedure is that the time pattern of the transferred signal power when elongating at constant velocity is oscillatory with an exponentially increasing frequency.

The very rapid increase in the oscillation cycles due to the exponential frequency growth makes it extremely difficult to interrupt the fibre fusion at a precise oscillation cycle.

Consequently it is very difficult in practice to form couplers having desired filtration characteristics with a satisfactory margin of accuracy.

The object of the present invention is to provide a method for fusion-forming monomodal fibre-optic couplers of the stated type and for the stated applications which enables fibre fusion to be interrupted at a precise oscillation cycle, to achieve simple formation of monomodal couplers possessing precise filtration characteristics.

This object is attained by a method for fusion-forming monomodal fibre-optic couplers, in particular of 2x2 type, comprising essentially the following steps:
a) bringing the optical fibres into mutual contact along a short length of their central zone;
b) fusing the optical fibres;
c) elongating the optical fibres during the fusion;
characterised in that said step involving elongation of the fibres during fusion is effected by subjecting the fibres to a traction which increases with time.

In a preferred embodiment, said traction increases with time in accordance with a logarithmic relationship.

Usefully, the parameters of said logarithmic relationship are such as to exactly compensate the exponential increase in the oscillation frequency of the transferred signal power, said increase occurring during fibre fusion with constant velocity traction, so that the oscillation frequency of the transferred signal power becomes constant with time during the fusion.

Alternatively, by subjecting the fibres to a traction which varies with time in accordance with a suitable exponential relationship [of the type A(1-Be^{-t/r})] an output power pattern can be obtained which asymptotically reaches the desired value after a certain number of oscillations.

The functional characteristics and advantages of a method according to the present invention will be more apparent from the description given hereinafter by way of non-limiting example, with reference to the accompanying schematic drawings in which:
Figure 1 is a diagram showing the pattern of the transmitted power against time during fusion with constant velocity traction;
Figure 2 shows the same diagram as Figure 1 during fusion with a traction velocity which varies with time in accordance with a logarithmic relationship; and
Figure 3 shows the same diagram as Figure 2 during fusion with a traction velocity which varies with time in accordance with a suitable exponential relationship.

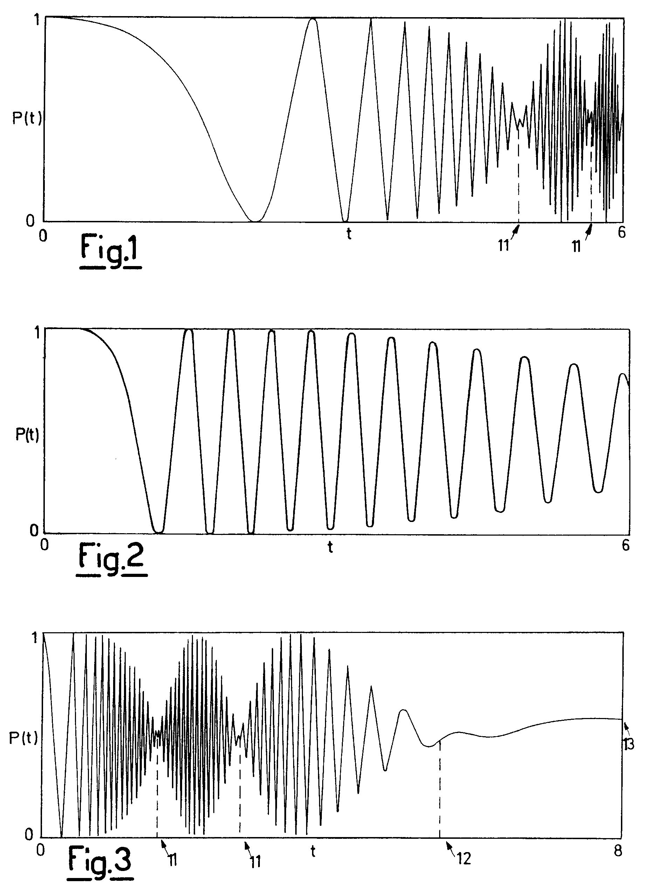

Observing the diagram of Figure 1, which was obtained experimentally during a test of fusion with constant fibre traction velocity, it can be seen that the transmitted power shows an oscillatory pattern with the frequency increasing with time.

The amplitude modulation of the signal of Figure 1, which is particularly evident at the points 11, is caused by the fact that the coupler coefficient depends on the input signal polarization.

The diagram of Figure 1 can also be significantly interpreted as a power/elongation diagram. In this respect, because of the direct proportionality between space and time within a constant velocity phenomenon, the graph pattern is the same both for the power/time diagram and for the power/elongation diagram.

As the distance between the individual peaks becomes increasingly less with the passage of time, it is apparent that the frequency increase assumes an intrinsically exponential rather than linear pattern. This phenomenon can also be measured and analyzed to mathematically determine the parameters which characterise the exponential curve in question.

Having determined the parameters of the frequency increase, a traction is applied to the two fibres during the fusion which is no longer constant but varies with time in accordance with a logarithmic relationship.

The logarithmic curve parameters to be applied are chosen such as to compensate the exponential pattern of the phenomenon of Figure 1.

Observing the diagram of Figure 2, which was obtained experimentally during a test of fusion with the fibre traction velocity increasing logarithmically, it can be seen that the transmitted power shows an oscillatory pattern with the frequency virtually constant with time.

It is apparent that by this means, interrupting fusion after a precise number of oscillation cycles is greatly facilitated.

Alternatively a traction is applied to the two fibres during fusion which varies with time in accordance with a suitable exponential relationship, the parameters of which are chosen such as to obtain an asymptotic variation in the transmitted power.

Observing the diagram of Figure 3, which was obtained experimentally during a test of fusion with the fibre traction velocity increasing in accordance with this second relationship, it can be seen that the transmitted power shows an initially oscillatory pattern which reaches a steady state after a certain number of oscillations.

In this respect, after that instant of time indicated by 12, the transmitted power becomes virtually constant with time.

The steady state value 13 depends on the choice of the parameters relative to the traction velocity, and can be easily set to the desired value.

It will be apparent that in this manner, if it is decided to interrupt fusion after cessation of the initial oscillations, the choice of the precise moment of interruption is in no way critical.

This fact assumes further importance in that the method becomes independent of any inaccuracies due to the thermal inertia of the fusion process.

## Claims

1. A method for fusion-forming monomodal fibre-optic couplers, in particular of 2x2 type, comprising essentially the following steps:
a) bringing the optical fibres into mutual contact along a short length of their central zone;
b) fusing the optical fibres;
c) elongating the optical fibres during the fusion;
characterised in that said step involving elongation of the fibres during fusion is effected by subjecting the fibres to a traction which increases with time.

2. A method as claimed in claim 1, characterised in that said traction increases with time in accordance with a logarithmic relationship.

3. A method as claimed in claim 2, characterised in that the parameters of said logarithmic relationship are such as to exactly compensate the exponential increase in the oscillation frequency of the transferred signal power, said increase occurring during fibre fusion with constant velocity traction, so that the oscillation frequency of the transferred signal power becomes constant with time during the fusion.

4. A method as claimed in claim 1, characterised in that said traction varies with time in accordance with a suitable exponential relationship such that after a certain number of oscillation cycles the transferred signal becomes constant with time.
